# EUROPEAN PATENT SPECIFICATION

(11) **EP 3 527 892 B1**
(45) Date of publication and mention of the grant of the patent: **25.03.2026**
(21) Application number: 18773063.5
(22) Date of filing: 28.02.2018
(51) Int. Cl.: F24C 7/08, H05B 6/06, H05B 6/44, H05B 6/12

(54) **ELECTROMAGNETIC COOKING APPLIANCE AND POWER CONTROL METHOD THEREOF**
ELEKTROMAGNETISCHES KOCHGERÄT UND VERFAHREN ZUR STEUERUNG DER LEISTUNG DAVON
APPAREIL DE CUISSON ÉLECTROMAGNÉTIQUE ET SON PROCÉDÉ DE COMMANDE

(30) Priority: 21.12.2017 CN 201711390613
(43) Date of publication of application: 21.08.2019
(73) Proprietor: Foshan Shunde Midea Electrical Heating Appliances Manufacturing Co., Limited, Beijiao, Shunde Foshan Guangdong 528311 (CN)
(72) Inventor: LEI, Jun, Guangdong 528311 (CN); BYUN, Jaeeun, Guangdong 528311 (CN); WANG, Yunfeng, Guangdong 528311 (CN); ZENG, Lutian, Guangdong 528311 (CN); JIANG, Deyong, Guangdong 528311 (CN); ZHANG, Fan, Guangdong 528311 (CN); HUANG, Shufeng, Guangdong 528311 (CN); LIU, Wenhua, Guangdong 528311 (CN); QU, Yuehong, Guangdong 528311 (CN); DU, Fang, Guangdong 528311 (CN)
(74) Representative: Whitlock, Holly Elizabeth Ann
(86) International application number: PCT/CN2018/077600
(87) International publication number: WO 2019/119640

(56) References cited:
- EP-A1- 2 405 715
- EP-A1- 2 760 251
- EP-A2- 2 506 668
- CN-A- 104 279 587
- CN-A- 104 284 465
- CN-A- 107 087 319
- CN-U- 201 438 767
- CN-U- 203 457 345
- CN-U- 205 383 656
- JP-A- 2004 055 167
- JP-A- 2009 094 028
- US-A1- 2013 334 211
- US-A1- 2013 334 212
- US-A1- 2016 100 461

## Description

### FIELD

The present disclosure relates to a field of household appliances, and more particularly to a method for controlling a power of an electromagnetic cooking appliance, and an electromagnetic cooking appliance.

### BACKGROUND

When a plurality of coil disks heat a cooking appliance simultaneously, since coupling interference of magnetic fields generated among the plurality of coil disks, the plurality of coil disks cannot simultaneously heat with different powers. EP2506668 A2 describes a control method of induction heater cooking wherein pulse width modulation (PWM) is used to control a plurality of heating coils. An equal duty ratio PWM signal is maintained for each of the plurality of coils. EP 2405715 A1 describes an induction cooking device with a central coil and a plurality of peripheral coils, wherein the coils are switched on and off independently of one another.

### SUMMARY

The present disclosure aims to solve one of the technical problems in the related art to at least some extent. Therefore, a first objective of the present disclosure is to provide a method for controlling a power of an electromagnetic cooking appliance, which may enable a plurality of coil disks to simultaneously heat with different powers.

A second objective of the present disclosure is to provide a non-transitory computer readable storage medium.

A third objective of the present disclosure is to provide an electromagnetic cooking appliance.

Aspects of the invention are set out in the claims.

With the electromagnetic cooking appliance according to one or more embodiments of the present disclosure, by the method for controlling the power of the electromagnetic cooking appliance described above, it may enable the plurality of coil disks to simultaneously heat with different powers.

### BRIEF DESCRIPTION OF THE DRAWINGS

Fig. 1 is a flow chart illustrating a method for controlling a power of an electromagnetic cooking appliance according to an embodiment of the present disclosure.
Fig. 2 is a schematic diagram illustrating a drive control circuit of an electromagnetic cooking appliance according to an embodiment of the present disclosure.
Fig. 3 is a schematic diagram illustrating a drive control circuit of an electromagnetic cooking appliance according to another embodiment of the present disclosure.
Fig. 4 is a waveform diagram illustrating a method for controlling a power of an electromagnetic cooking appliance according to an embodiment of the present disclosure.
Fig. 5 is a resonant waveform diagram illustrating a method for controlling a power of an electromagnetic cooking appliance according to an embodiment of the present disclosure.
Fig. 6 is a resonant waveform diagram illustrating a method for controlling a power of an electromagnetic cooking appliance according to another embodiment of the present disclosure.
Fig. 7 is a resonant waveform diagram illustrating a method for controlling a power of an electromagnetic cooking appliance according to another embodiment of the present disclosure.

### DETAILED DESCRIPTION

Reference will now be made in detail to embodiments of the present disclosure, examples of which are illustrated in the accompanying drawings, in which the same or similar numbers represent the same or similar elements or the elements with the same or similar function, the embodiments described in the following accompany drawings are exemplary, only for purpose of description of the present disclosure, but not constructed to limit the present disclosure.

A method for controlling a power of an electromagnetic cooking appliance and an electromagnetic cooking appliance provided in the embodiments of the present disclosure will be described below with reference to the accompanying drawings.

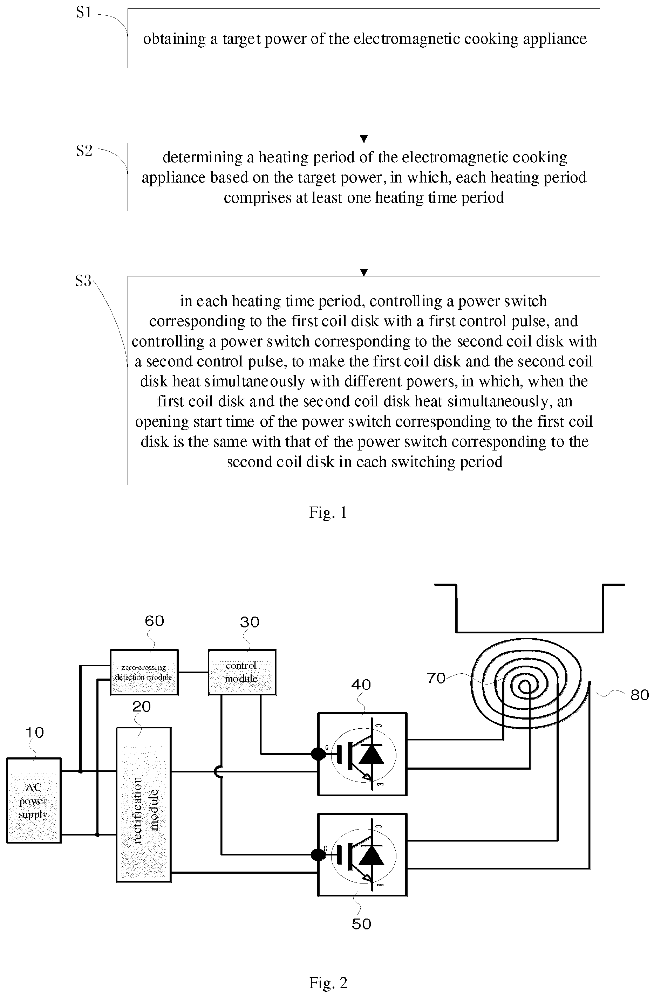

Fig. 1 is a flow chart illustrating a method for controlling a power of an electromagnetic cooking appliance according to an embodiment of the present disclosure.

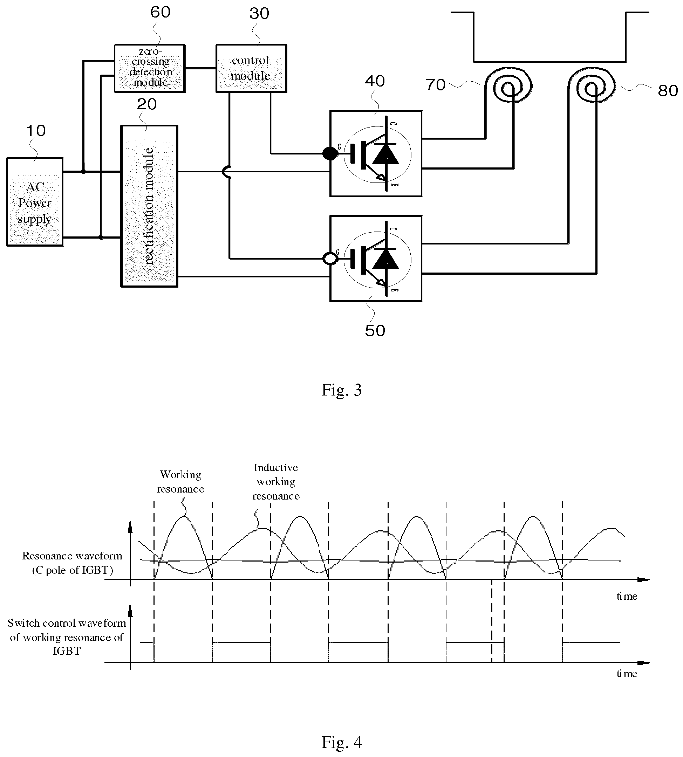

In one or more embodiments of the present disclosure, as illustrated in Fig. 2 and Fig. 3, the electromagnetic cooking appliance includes a first coil disk 70 and a second coil disk 80. Each of the first coil disk 70 and the second coil disk 80 corresponds to an independent resonance circuit. As illustrated in Fig. 2, the first coil disk 70 and the second coil disk 80 may be disposed concentrically. Or as illustrated in Fig. 3, the first coil disk 70 and the second coil disk 80 may be disposed adjacently.

In detail, as illustrated in Fig. 2 and Fig. 3, a drive control circuit of the electromagnetic cooking appliance may include an AC power supply 10, a rectification module 20, a control module 30, a first power switch 40, a second power switch 50 and a zero-crossing detection module 60. The first power switch 40 and the second power switch 50 may be an insulated gate bipolar translator (IGBT). Each of the first coil disk 70 and the second coil disk 80 has an independent resonance circuit. That is, the first power switch 40 is configured to control the first coil disk 70 to turn on or off, and the second power switch 50 is configured to control the second coil disk 80 to turn on or off. The zero-crossing detection module 60 is configured to detect a zero-crossing signal of the AC power supply. The rectification module 20 is configured to rectify the input AC power supply into a direct current (DC) power. The switch module is configured to invert the rectified DC signal into a high frequency signal above 20 KHz. The high frequency signal may be changed from an electrical signal into an alternating electromagnetic signal by the coil disk. The electromagnetic cooking appliance (a heated body) generates an eddy current and a hysteresis motion in the alternating electromagnetic signal, thereby generating energy.

As illustrated in Fig. 4, when one of the power switches controls the corresponding coil disk to operate, an alternating magnetic field is generated around the coil disk and around the heated body, and the coil disk that is not controlled by the power switch will generate a follow-up resonance with the same frequency in the alternating magnetic field. An arrival times of the two resonances to reach a valley are very close.

As illustrated in Fig. 1, the method for controlling the power of the electromagnetic cooking appliance according to one or more embodiments of the present disclosure may include the following steps.

S1, a target power of the electromagnetic cooking appliance is obtained.

S2, a heating period of the electromagnetic cooking appliance is determined based on the target power. Each heating period includes at least one heating time period. In one or more embodiments of the present disclosure, each heating time period corresponds to one half-wave period of the input AC power supply. The heating period is less or equal to 320ms. It should be noted that 320ms is 32 half-wave periods of the AC power supply, the minimum heating period is to heat a half-wave period of the AC power supply for 10ms and stop for 310ms. A minimum average power is a reference power P*1/32. If the minimum reference control power is 3200W, the minimum power is 100W, and the smaller the heating period, the more uniform heating, by combining with the minimum control power and heating uniformity, the heating period is limited to within 320ms.

S3, in each heating time period, a power switch corresponding to the first coil disk is controlled with a first control pulse, and a power switch corresponding to the second coil disk is controlled with a second control pulse, to make the first coil disk and the second coil disk heat simultaneously with different powers. When the first coil disk and the second coil disk heat simultaneously, an opening start time of the power switch corresponding to the first coil disk is the same with that of the power switch corresponding to the second coil disk in each switching period.

In detail, the target power of the electromagnetic cooking appliance is obtained after the electromagnetic cooking appliance is powered on, and then the heating period of the electromagnetic cooking appliance is determined based on the target power. Each heating period includes at least one heating time period. In each heating time period, the power switch corresponding to the first coil disk and the power switch corresponding to the second coil disk are controlled with different control pulses, and the two power switches are controlled to be the same at the beginning of the opening in each switching period. Therefore, a purpose of heating by the first coil disk and the second coil disk at the same time and with different powers is realized, and the heating is stopped until a present heating power of the cooking appliance reaches a preset target power. For example, when the first coil disk and the second coil disk simultaneously heat, a coil disk (assuming the first coil disk) with a heating maximum power is made as the reference, the power switches may be turned on at the same time, to realize the first coil disk and the second coil disk to heat simultaneously, and the power switches may be turned off at the same time or different time (i.e., widths of the control pulses are the same or different; the same power heating is realized when the widths of the control pulses are the same; and different power heating is realized when the widths of the control pulses are different), such as, the power switch corresponding to the first coil disk is controlled with the first control pulse, and the power switch corresponding to the second coil disk is controlled with the second control pulse, the pulse width of the first control pulse may be greater than the pulse width of the second control pulse, to make the first coil disk and the second coil disk heat with different powers.

The current heating power of the electromagnetic cooking appliance is a sum of a heating power of the first coil disk for each first heating period and a heating power of the second coil disk for each second heating period.

When the first coil disk and the second coil disk heat simultaneously, a switch-on period of the power switch corresponding to the first coil disk is different from that of the power switch corresponding to the second coil disk in each switching period, and the switch period of the power switch corresponding to the first coil disk is the same with that of the power switch corresponding to the second coil disk, according to an embodiment of the present invention.

Namely, in each switch period, if the first coil disk is turned on at T1, and turned off at T2, and if the second coil disk is turned on at t1, and turned off at t2, T1>t1, and T1+T2=t1+t2. Thus, the first coil disk and the second coil disk may be sure to heat simultaneously.

The heating period including the heating time period will be described below.

According to an embodiment of the present disclosure, each heating period includes one heating time period, and the first coil disk and the second coil desk heat continuously and simultaneously.

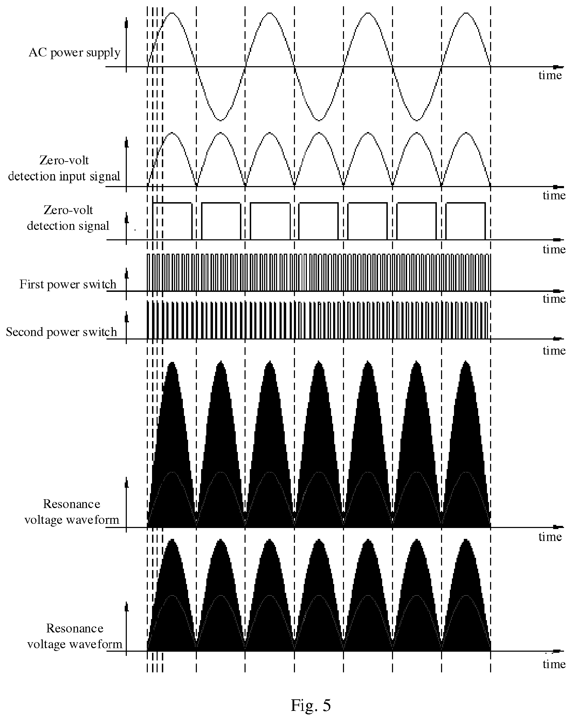

Namely, as illustrated in Fig. 5, in the heating time period, the first power switch the first is controlled with the first control pulse, and the second power switch is controlled with the second control pulse, and the width of the first control pulse is different from the width of the second control pulse, and the first power switch and the second power switch are turned on at the same time, to realize the first coil disk and the second coil disk to heat simultaneously and continuously with different powers, until the current heating power of the cooking appliance reaches the preset target power. Thus, the first coil disk and the second coil disk are controlled to heat simultaneously, each heating period is a half period of the AC power supply, and the output power is the same in each period. There is no power flicker and interference to the power grid is small.

According to another embodiment of the present disclosure, each heating period includes four heating time periods. In a first heating time period and a second heating time period, the first coil disk and the second coil disk heat simultaneously; in a third heating time period and a fourth heating time period, the first coil disk heats, and the second coil disk stops heating.

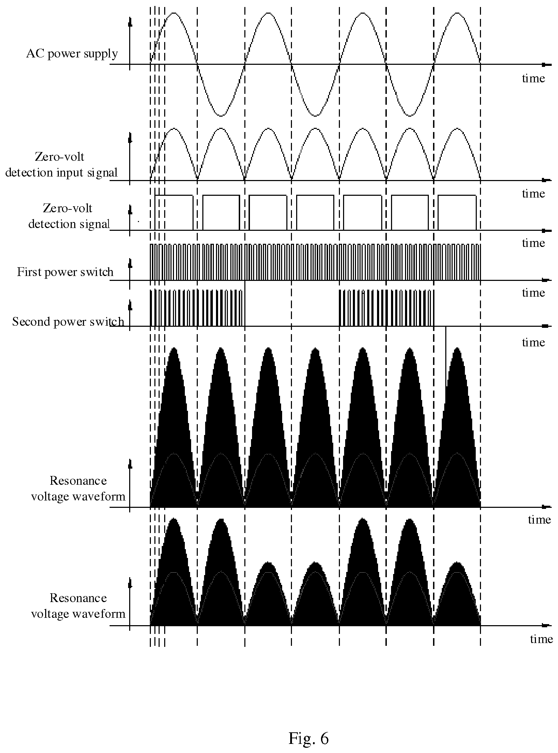

Namely, as illustrated in Fig. 6, in the first heating time period and the second heating time period, the first power switch is controlled with the first control pulse, and the second power switch is controlled with the second control pulse, and the width of the first control pulse is different from the width of the second control pulse, and the first power switch and the second power switch are turned on at the same time, to realize the first coil disk and the second coil disk to heat simultaneously and continuously with different powers. In the third heating time period and the fourth heating time period, the first power switch is still controlled with the first control pulse, and the second power switch is controlled to be turned off, to make the first coil disk heat, and the second coil disk stop heating. During the time, the present power of the electromagnetic cooking appliance may be adjusted. Thus, by controlling the output power of the first coil disk to be less than the minimum continuous output power allowed by the system, the second coil disk adopts an intermittent heating control method to achieve the purpose of simultaneously heating and enhance the uniform heating effect.

According to another embodiment of the present disclosure, each heating period includes four heating time periods. In a first heating time period and a second heating time period, the first coil disk and the second coil disk heat simultaneously; in a third heating time period, the first coil disk heat, and the second coil disk stops heating; in a fourth heating time period, the first coil disk and the second coil disk stop heating simultaneously.

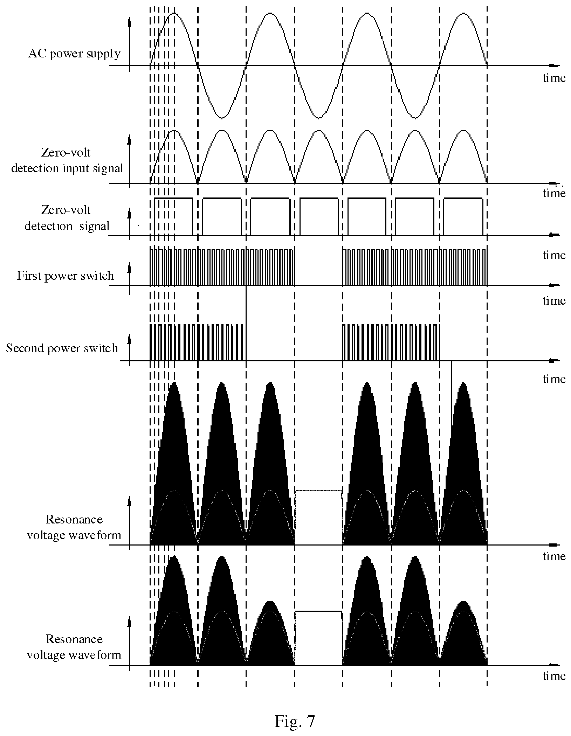

Namely, as illustrated in Fig. 7, in the first heating time period and the second heating time period, the first power switch is controlled with the first control pulse, and the second power switch is controlled with the second control pulse, and the width of the first control pulse is different from the width of the second control pulse, and the first power switch and the second power switch are turned on at the same time, to realize the first coil disk and the second coil disk to heat simultaneously with different powers. In the third heating time period, the first power switch is still controlled with the first control pulse, and the second power switch is controlled to be turned off, to make the first coil disk heat, and the second coil disk stop heating. In the fourth heating time period, the first power switch and the second power switch are controlled to be turned off. During the time, the present power of the electromagnetic cooking appliance may be adjusted. Thus, by controlling the output powers of the two coil disks to be less than the minimum continuous output power allowed by the system, the two coil disks adopt an intermittent heating control method to achieve the purpose of simultaneously heating and enhance the uniform heating effect.

From the above, as illustrated in Fig. 5-Fig. 9, since the alternating magnetic field is generated around the first coil disk when the first coil disk is controlled to heat, a resonance voltage is generated in a corresponding resonance circuit of the first coil disk, and a resonance voltage (less than the resonance voltage generated by the corresponding resonant circuit of the first coil disk) is generated in a corresponding resonance circuit of the second coil disk even if the second coil disk does not heat. Likewise, when the second coil disk is controlled to heat, even if the first coil disk does not heat, the resonance circuit corresponding to the first coil disk also generates a resonance voltage.

In conclusion, with the method for controlling the power of the electromagnetic cooking appliance according to one or more embodiments of the present disclosure, the target power of the electromagnetic cooking appliance is obtained; the heating period of the electromagnetic cooking appliance is determined based on the target power, in which each heating period includes at least one heating time period, and in each heating time period, the power switch corresponding to the first coil disk is controlled with the first control pulse, and the power switch corresponding to the second coil disk is controlled with the second control pulse, to make the first coil disk and the second coil disk heat simultaneously with different powers, in which, when the first coil disk and the second coil disk heat simultaneously, thereby enabling the plurality of coil disks to simultaneously heat with different powers.

Further, one or more embodiments of the present disclosure provide a non-transitory computer readable storage medium having stored computer programs thereon. The method for controlling the power of the electromagnetic cooking appliance described above may be implemented when the programs are performed by a processor.

With the non-transitory computer readable storage medium according to one or more embodiments of the present disclosure, by performing the method for controlling the power of the electromagnetic cooking appliance described above, it may enable the plurality of coil disks to simultaneously heat with different powers.

Further, one or more embodiments of the present disclosure provide an electromagnetic cooking appliance, including a first coil disk, a second coil disk, a memory, a processor and programs stored in the memory and executed by the processor for controlling a power of an electromagnetic cooking appliance. Each of the first coil disk and the second coil disk corresponds to an independent resonance circuit. The method for controlling the power of the electromagnetic cooking appliance described above may be implemented when the programs of controlling a power of the electromagnetic cooking appliance is performed.

It should be noted that for details of the electromagnetic cooking appliance according to the embodiments of the present disclosure not described herein, reference may be made to the details disclosed in the method for controlling the power of the electromagnetic cooking appliance according to the embodiments of the present disclosure, which are not repeated here.

With the electromagnetic cooking appliance according to one or more embodiments of the present disclosure, by the method for controlling the power of the electromagnetic cooking appliance described above, it may enable the plurality of coil disks to simultaneously heat with different powers.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present disclosure, "a plurality of" means two or more than two, unless specified otherwise.

In the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

In the present disclosure, unless specified or limited otherwise, the first characteristic is "on" or "under" the second characteristic refers to the first characteristic and the second characteristic can be direct or via media indirect mountings, connections, and couplings. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. A method for controlling a power of an electromagnetic cooking appliance, wherein, the electromagnetic cooking appliance comprises a first coil disk (70, 80) and a second coil disk (70, 80), each of the first coil disk (70, 80) and the second coil disk (70, 80) corresponds to an independent resonance circuit, and the method for controlling the power comprises the following steps:
obtaining (S1) a target power of the electromagnetic cooking appliance;
determining (S2) a heating period of the electromagnetic cooking appliance based on the target power, wherein, each heating period comprises at least one heating time period;
in each heating time period, controlling (S3) a power switch (40, 50) corresponding to the first coil disk (70, 80) with a first control pulse with a first pulse width, whereby a first resonance voltage is generated in the corresponding resonance circuit of the first coil disk and a second resonance voltage is generated in the corresponding resonance circuit of the second coil disk, respectively, and controlling a power switch (40, 50) corresponding to the second coil disk (70, 80) with a second control pulse with a second pulse width, whereby a third resonance voltage is generated in the corresponding resonance circuit of the first coil disk and a fourth resonance voltage is generated in the corresponding resonance circuit of the second coil disk, respectively, to make the first coil disk (70, 80) and the second coil disk (70, 80) heat simultaneously with different powers, wherein, when the first coil disk (70, 80) and the second coil disk (70, 80) heat simultaneously, an opening start time of the power switch (40, 50) corresponding to the first coil disk (70, 80) is the same with that of the power switch (40, 50) corresponding to the second coil disk (70, 80) in each switching period.

2. The method according to claim 1, wherein each heating period corresponds to a half-wave period of an input alternating current (AC) power supply.

3. The method according to claim 1 or 2, wherein each heating period comprises one heating time period, and the first coil disk and the second coil desk heat continuously and simultaneously.

4. The method according to claim 1 or 2, wherein each heating period comprises four heating time periods, in which,
in a first heating time period and a second heating time period, the first coil disk and the second coil disk heat simultaneously;
in a third heating time period and a fourth heating time period, the first coil disk heats, and the second coil disk stops heating.

5. The method according to claim 1 or 2, wherein each heating period comprises four heating time periods, in which,
in a first heating time period and a second heating time period, the first coil disk and the second coil disk heat simultaneously;
in a third heating time period, the first coil disk heats, and the second coil disk stops heating;
in a fourth heating time period, the first coil disk and the second coil disk stop heating simultaneously.

6. The method according to any one of claims 1-5, wherein when the first coil disk and the second coil disk heat simultaneously, a switch-on period of the power switch corresponding to the first coil disk is different from that of the power switch corresponding to the second coil disk in each switching period, and the switch period of the power switch corresponding to the first coil disk is the same with that of the power switch corresponding to the second coil disk.

7. The method according to claim 1, wherein the heating period is less or equal to 320ms.

8. The method according to claim 1, the first coil disk and the second coil disk are disposed concentrically or adjacently.

9. A non-transitory computer readable storage medium having stored computer programs thereon, wherein the program is performed by the processor to realize a power control method the electromagnetic cooking appliance according to any of the claims 1-8.

10. An electromagnetic cooking appliance, comprising a first coil disk (70, 80), a second coil disk (70, 80), a memory, a processor and a power control program of the electromagnetic cooking appliance which is stored in the memory and can operate on the processor, wherein, the first coil disk (70, 80) and the second coil disk (70, 80) correspond to independent resonance circuit respectively, the power control program of the electromagnetic cooking appliance is performed by the processor to realize the power control method of the electromagnetic cooking appliance according to any of claims 1-8.

## Patentansprüche

1. Verfahren zum Steuern einer Leistung eines elektromagnetischen Kochgeräts, wobei das elektromagnetische Kochgerät eine erste Spulenscheibe (70, 80) und eine zweite Spulenscheibe (70, 80) umfasst, jede von der ersten Spulenscheibe (70, 80) und der zweiten Spulenscheibe (70, 80) mit einem unabhängigen Resonanzschwingkreis korrespondiert und das Verfahren zum Steuern der Leistung die folgenden Schritte umfasst:
Erhalten (S1) einer Sollleistung des elektromagnetischen Kochgeräts;
Bestimmen (S2) einer Heizperiode des elektromagnetischen Kochgeräts basierend auf der Sollleistung, wobei jede Heizperiode mindestens eine Heizzeitperiode umfasst;
in jeder Heizzeitperiode Steuern (S3) eines mit der ersten Spulenscheibe (70, 80) korrespondierenden Leistungsschalters (40, 50) mit einem ersten Steuerimpuls mit einer ersten Impulsbreite, wodurch eine erste Resonanzspannung in dem korrespondierenden Resonanzschwingkreis der ersten Spulenscheibe erzeugt wird bzw. eine zweite Resonanzspannung in dem korrespondierenden Resonanzschwingkreis der zweiten Spulenscheibe erzeugt wird, und Steuern eines mit der zweiten Spulenscheibe (70, 80) korrespondierenden Leistungsschalters (40, 50) mit einem zweiten Steuerimpuls mit einer zweiten Impulsbreite, wodurch eine dritte Resonanzspannung in dem korrespondierenden Resonanzschwingkreis der ersten Spulenscheibe erzeugt wird bzw. eine vierte Resonanzspannung in dem korrespondierenden Resonanzschwingkreis der zweiten Spulenscheibe erzeugt wird, um zu veranlassen, dass die erste Spulenscheibe (70, 80) und die zweite Spulenscheibe (70, 80) sich mit unterschiedlichen Leistungen gleichzeitig erhitzen, wobei, wenn die erste Spulenscheibe (70, 80) und die zweite Spulenscheibe (70, 80) sich gleichzeitig erhitzen, eine Öffnungsstartzeit des mit der ersten Spulenscheibe (70, 80) korrespondierenden Leistungsschalters (40, 50) gleich derjenigen des mit der zweiten Spulenscheibe (70, 80) korrespondierenden Leistungsschalters (40, 50) in jeder Schaltperiode ist.

2. Verfahren nach Anspruch 1, wobei jede Heizperiode mit einer Halbwellenperiode einer Eingangswechselstrom(AC)-Versorgung korrespondiert.

3. Verfahren nach Anspruch 1 oder 2, wobei jede Heizperiode eine Heizzeitperiode umfasst und die erste Spulenscheibe und die zweite Spulenscheibe sich kontinuierlich und gleichzeitig erhitzen.

4. Verfahren nach Anspruch 1 oder 2, wobei jede Heizperiode vier Heizzeitperioden umfasst, wobei
in einer ersten Heizzeitperiode und einer zweiten Heizzeitperiode die erste Spulenscheibe und die zweite Spulenscheibe sich gleichzeitig erhitzen;
in einer dritten Heizzeitperiode und einer vierten Heizzeitperiode die erste Spulenscheibe sich erhitzt und die zweite Spulenscheibe aufhört, sich zu erhitzen.

5. Verfahren nach Anspruch 1 oder 2, wobei jede Heizperiode vier Heizzeitperioden umfasst, wobei
in einer ersten Heizzeitperiode und einer zweiten Heizzeitperiode die erste Spulenscheibe und die zweite Spulenscheibe sich gleichzeitig erhitzen;
in einer dritten Heizzeitperiode die erste Spulenscheibe sich erhitzt und die zweite Spulenscheibe aufhört, sich zu erhitzen;
in einer vierten Heizzeitperiode die erste Spulenscheibe und die zweite Spulenscheibe aufhören, sich gleichzeitig zu erhitzen.

6. Verfahren nach einem der Ansprüche 1-5, wobei, wenn die erste Spulenscheibe und die zweite Spulenscheibe sich gleichzeitig erhitzen, eine Einschaltperiode des mit der ersten Spulenscheibe korrespondierenden Leistungsschalters sich von derjenigen des mit der zweiten Spulenscheibe korrespondierenden Leistungsschalters in jeder Schaltperiode unterscheidet und die Schaltperiode des mit der ersten Spulenscheibe korrespondierenden Leistungsschalters gleich derjenigen des mit der zweiten Spulenscheibe korrespondierenden Leistungsschalters ist.

7. Verfahren nach Anspruch 1, wobei die Heizperiode kleiner als oder gleich 320 ms ist.

8. Verfahren nach Anspruch 1, wobei die erste Spulenscheibe und die zweite Spulenscheibe konzentrisch oder benachbart angeordnet sind.

9. Nichttransitorisches computerlesbares Speichermedium, das darin gespeicherte Computerprogramme aufweist, wobei das Programm von dem Prozessor durchgeführt wird, um ein Leistungssteuerungsverfahren des elektromagnetischen Kochgeräts nach einem der Ansprüche 1-8 zu realisieren.

10. Elektromagnetisches Kochgerät, das eine erste Spulenscheibe (70, 80), eine zweite Spulenscheibe (70, 80), einen Speicher, einen Prozessor und ein Leistungssteuerungsprogramm des elektromagnetischen Kochgeräts, das in dem Speicher gespeichert ist und in dem Prozessor ablaufen kann, umfasst, wobei die erste Spulenscheibe (70, 80) und die zweite Spulenscheibe (70, 80) jeweils mit einem unabhängigen Resonanzschwingkreis korrespondieren, wobei das Leistungssteuerungsprogramm des elektromagnetischen Kochgeräts von dem Prozessor durchgeführt wird, um das Leistungssteuerungsverfahren des elektromagnetischen Kochgeräts nach einem der Ansprüche 1-8 zu realisieren.

## Revendications

1. Procédé de commande d'une puissance d'un appareil de cuisson électromagnétique, l'appareil de cuisson électromagnétique comprenant un premier disque de bobine (70, 80) et un second disque de bobine (70, 80), chacun du premier disque de bobine (70, 80) et du second disque de bobine (70, 80) correspond à un circuit de résonance indépendant et le procédé de commande de puissance comprend les étapes suivantes :
l'obtention (S1) d'une puissance cible de l'appareil de cuisson électromagnétique ;
la détermination (S2) d'une période de chauffage de l'appareil de cuisson électromagnétique sur la base de la puissance cible, dans lequel chaque période de chauffage comprend au moins une période de temps de chauffage ;
durant chaque période de temps de chauffage, la commande (S3) d'un commutateur de puissance (40, 50) correspondant au premier disque de bobine (70, 80) avec une première impulsion de commande d'une première largeur d'impulsion, moyennant quoi une première tension de résonance est générée dans le circuit de résonance correspondant du premier disque de bobine et une deuxième tension de résonance est générée dans le circuit de résonance correspondant du second disque de bobine, respectivement, et la commande d'un commutateur de puissance (40, 50) correspondant au second disque de bobine (70, 80) avec une seconde impulsion de commande d'une seconde largeur d'impulsion, moyennant quoi une troisième tension de résonance est générée dans le circuit de résonance correspondant du premier disque de bobine et une quatrième tension de résonance est générée dans le circuit de résonance correspondant du second disque de bobine, respectivement, pour faire chauffer simultanément le premier disque de bobine (70, 80) et le second disque de bobine (70, 80), avec différentes puissances, dans lequel, lorsque le premier disque de bobine (70, 80) et le second disque de bobine (70, 80) chauffent simultanément, un temps de début d'ouverture du commutateur de puissance (40, 50) correspondant au premier disque de bobine (70, 80) est identique à celui du commutateur de puissance (40, 50) correspondant au second disque de bobine (70, 80) durant chaque période de commutation.

2. Procédé selon la revendication 1, dans lequel chaque période de chauffage correspond à une période de demi-onde d'une alimentation en courant alternatif (C.A.) d'entrée.

3. Procédé selon la revendication 1 ou 2, dans lequel chaque période de chauffage comprend une seule période de temps de chauffage, et le premier disque de bobine ainsi que le second disque de bobine chauffent continûment et simultanément.

4. Procédé selon la revendication 1 ou 2, dans lequel chaque période de chauffage comprend quatre périodes de temps de chauffage, dans lesquelles,
durant une première période de temps de chauffage et une seconde période de temps de chauffage, le premier disque de bobine et le second disque de bobine chauffent simultanément ;
durant une troisième période de temps de chauffage et une quatrième période de temps de chauffage, le premier disque de bobine chauffe, et le second disque de bobine cesse de chauffer.

5. Procédé selon la revendication 1 ou 2, dans lequel chaque période de chauffage comprend quatre périodes de temps de chauffage, dans lesquelles,
durant une première période de temps de chauffage et une seconde période de temps de chauffage, le premier disque de bobine et le second disque de bobine chauffent simultanément ;
durant une troisième période de temps de chauffage, le premier disque de bobine chauffe, et le second disque de bobine cesse de chauffer ;
durant une quatrième période de temps de chauffage, le premier disque de bobine et le second disque de bobine cessent de chauffer simultanément.

6. Procédé selon l'une des quelconque des revendications 1 à 5, dans lequel lorsque le premier disque de bobine et le second disque de bobine chauffent simultanément, une période d'activation du commutateur de puissance correspondant au premier disque de bobine est différente de celle du commutateur de puissance correspondant au second disque de bobine durant chaque période de commutation, et la période de commutation du commutateur de puissance correspondant au premier disque de bobine est identique à celle du commutateur de puissance correspondant au second disque de bobine.

7. Procédé selon la revendication 1, dans lequel la période de chauffage est inférieure ou égale à 320 ms.

8. Procédé selon la revendication 1, dans lequel le premier disque de bobine et le second disque de bobine sont disposés de manière concentrique ou adjacente.

9. Support de stockage lisible par ordinateur non transitoire stockant des programmes informatiques, dans lequel le processeur exécute le programme pour réaliser un procédé de commande de puissance de l'appareil de cuisson électromagnétique selon l'une quelconque des revendications 1 à 8.

10. Appareil de cuisson électromagnétique, comprenant un premier disque de bobine (70, 80), un second disque de bobine (70, 80), une mémoire, un processeur et un programme de commande de puissance de l'appareil de cuisson électromagnétique qui est stocké dans la mémoire et peut fonctionner sur le processeur, dans lequel le premier disque de bobine (70, 80) et le second disque de bobine (70, 80) correspondent respectivement à un circuit de résonance indépendant, le processeur exécute le programme de commande de puissance de l'appareil de cuisson électromagnétique pour réaliser le procédé de commande de puissance de l'appareil de cuisson électromagnétique selon l'une quelconque des revendications 1 à 8.
